# EUROPÄISCHE PATENTSCHRIFT

(11) **EP 2 612 392 B1**
(45) Veröffentlichungstag und Bekanntmachung des Hinweises auf die Patenterteilung: **30.05.2018**
(21) Anmeldenummer: 11729410.8
(22) Anmeldetag: 01.07.2011
(51) Int. Cl.: H01M 2/30, H01M 10/0525, H01M 2/20, H01M 10/04, H01M 10/34, B60L 11/18

(54) **BATTERIEZELLE MIT TERMINALS AN DEN SEITENFLÄCHEN, BATTERIEZELLENMODUL, VERFAHREN ZUR HERSTELLUNG EINES BATTERIEZELLENMODULS UND KRAFTFAHRZEUG**
BATTERY CELL, BATTERY CELL MODULE, METHOD FOR PRODUCING A BATTERY CELL MODULE AND MOTOR VEHICLE
ÉLÉMENT D'ACCUMULATEUR, MODULES D'ÉLÉMENTS D'ACCUMULATEUR, PROCÉDÉ DE FABRICATION D'UN MODULE D'ÉLÉMENTS D'ACCUMULATEUR ET VÉHICULE AUTOMOBILE

(30) Priorität: 31.08.2010 DE 102010039979
(43) Veröffentlichungstag der Anmeldung: 10.07.2013
(73) Patentinhaber: Samsung SDI Co., Ltd., Gyeonggi-do (KR); Robert Bosch GmbH, 70442 Stuttgart (DE)
(72) Erfinder: GLESS, Michael, 70437 Stuttgart-Zazenhausen (DE); ANGERBAUER, Ralf, 71696 Möglingen (DE)
(74) Vertreter: Bee, Joachim
(86) Internationale Anmeldenummer: PCT/EP2011/061096
(87) Internationale Veröffentlichungsnummer: WO 2012/028357

(56) Entgegenhaltungen:
- DE-A1-102008 034 862
- US-A1- 2003 017 387

## Beschreibung

Die vorliegende Erfindung betrifft eine Batteriezelle, insbesondere eine Lithium-Ionen-Batteriezelle, die ein Zellengehäuse mit einer zur Aufstellung der Batteriezelle dienenden Grundfläche und wenigstens eine Seitenfläche umfasst, sowie zwei Terminals umfasst, wobei ein erstes Terminal mit der Katode der Batteriezelle und ein zweites Terminal mit der Anode der Batteriezelle elektrisch leitfähig verbunden ist.

Weiterhin umfasst die Erfindung ein Batteriezellenmodul, welches mehrere erfindungsgemäße Batteriezellen umfasst.

Weitere Aspekte der vorliegenden Erfindung sind ein Verfahren zur Herstellung eines erfindungsgemäßen Batteriezellenmoduls sowie ein Kraftfahrzeug, welches wenigstens ein erfindungsgemäßes Batteriezellenmodul umfasst.

### Stand der Technik

Eine Batterie, die eine oder mehrere galvanische Batteriezellen umfasst, dient als elektrochemischer Energiespeicher und Energiewandler. Bei der Entladung der Batterie bzw. der jeweiligen Batteriezelle wird in der Batterie gespeicherte chemische Energie durch Interkalation in elektrische Energie umgewandelt. Diese elektrische Energie kann somit je nach Bedarf von einem Nutzer angefordert werden.

Insbesondere in Hybrid- und Elektrofahrzeugen werden in so genannten Batteriepacks Lithium-Ionen-Batterien oder Nickel-Metallhydrid-Batterien eingesetzt, die aus einer großen Anzahl in Serie geschalteter elektrochemischer Zellen bestehen.

Herkömmliche Batteriezellen sind derart ausgestaltet, dass an einer oberen Deckfläche ihres quaderförmigen Gehäuses die beiden, jeweils mit der Katode und Anode verbundenen Terminals angeordnet sind. Zur Herstellung eines Batteriezellenmoduls beziehungsweise einer gesamten, mehrere Batteriezellen umfassenden Batterie, werden diese herkömmlichen Batteriezellen relativ kompakt zu einem so genannten Battery Pack nebeneinander angeordnet. Zur Realisierung einer elektrischen Schaltung, vorzugsweise einer Reihenschaltung, werden Terminals nebeneinander angeordneter Batteriezellen mittels Zellverbinder verbunden. Diese Zellverbinder können extra Bauteile sein oder auch integrale Bestandteile wenigstens eines Terminals einer Batteriezelle. Zur Montage von Batteriezellenmodulen sind somit die einzelnen Batteriezellen nebeneinander zu positionieren und zu fixieren, und anschließend ist die elektrisch leitfähige Verbindung zwischen den Terminals durch Kontaktierung des Zellverbinders mit ein oder zwei Terminals herzustellen. Das heißt, dass neben den Montageschritten und Montagekräften, die zur Positionierung und Fixierung der Batteriezellen erforderlich sind, weitere Montageschritte durchgeführt werden müssen und weitere Montagekräfte aufgebracht werden müssen, um die elektrisch leitfähige Verbindung zwischen dem Zellverbinder und wenigstens einem Terminal herzustellen. Insbesondere bei hohen Stückzahlen wirkt sich dieser erhöhte Montageaufwand hinsichtlich der benötigten Fertigungszeit und der zur Verfügung zu stellenden Fertigungseinrichtungen ungünstig aus.

### Offenbarung der Erfindung

Es wird erfindungsgemäß eine Batteriezelle, insbesondere eine Lithium-Ionen-Batteriezelle, gemäß Anspruch 1 zur Verfügung gestellt, die ein Zellengehäuse mit einer zur Aufstellung der Batteriezelle dienenden Grundfläche und wenigstens einer Seitenfläche und zwei Terminals umfasst, wobei ein erstes Terminal mit der Katode der Batteriezelle und ein zweites Terminal mit der Anode der Batteriezelle elektrisch leitfähig verbunden ist. Erfindungsgemäß sind die Terminals an wenigstens einer Seitenfläche des Zellengehäuses angeordnet. Diese Seitenfläche erstreckt sich bevorzugt senkrecht zur Grundfläche zwecks Herstellung eines quaderförmigen Gehäuses. Die Erfindung ist jedoch nicht auf ein quaderförmiges Gehäuse eingeschränkt, sondern das Gehäuse könnte in einer speziellen Ausführungsform prismatisch ausgeführt sein, so dass die Seitenfläche in einem, von einem rechten Winkel abweichenden Winkel im Bezug zur Grundfläche angeordnet ist. In einer weiteren alternativen Ausgestaltung ist das Zellengehäuse im Wesentlichen zylinderförmig ausgeführt, so dass die Seitenfläche durch die Zylindermantelfläche ausgebildet ist.

Bevorzugte Ausführungsform ist jedoch eine Batteriezelle, die ein quaderförmiges Gehäuse aufweist.

### Die erfindungsgemäße Batteriezelle kann auch eine

Nickel-Metallhydrid-Batteriezelle sein.

### Vorteile der Erfindung

Der Vorteil der Erfindung liegt insbesondere darin, dass sich mehrere erfindungsgemäße Batteriezellen derart nebeneinander positionieren lassen, dass die seitlich angeordneten Terminals einander kontaktieren und die Batteriezellen bereits auf Grund ihrer Positionierung und Fixierung derart in einfacher Weise und mit geringstem Montageaufwand miteinander elektrisch in Reihe oder parallel geschaltet werden. Übliche Verspannkräfte zur Fixierung der Batteriezellen, die zum Beispiel in einem Gehäuse zur Herstellung eines Batteriezellenmoduls und/oder zur Herstellung einer gesamten Batterie dienen, können somit zur Aufbringung der Kontaktierungskraft zwischen den Terminals genutzt werden. Das heißt, dass eine Verspannung der Batteriezellen beziehungsweise die diese Verspannung bewirkenden Kräfte gleichzeitig genutzt werden, um die elektrisch leitfähige Kontaktierung der Terminals der Batteriezellen zu bewirken. Im Vergleich zu herkömmlichen Batteriezellen werden die Anzahl der zu verbindenden Teile und dementsprechend auch die erforderlichen Montageschritte zur Verbindung der Batteriezellen reduziert. So ist zum Beispiel kein extra Fügevorgang zum Anschluss eines extra Zellverbinders notwendig. Dadurch lässt sich die Zeit zur Montage eines Batteriezellenmoduls mit mehreren Batteriezellen erheblich verringern. Durch die geringe Anzahl der zu verbindenden Teile sowie auch durch den geringen Abstand zwischen den Batteriepolen der einzelnen Batteriezellen wird der Übergangswiderstand verringert, so dass ein mehrere erfindungsgemäße Batteriezellen umfassendes Modul beziehungsweise eine Batterie mit mehreren Batteriezellen mit geringerer Verlustleistung und einem besseren Gesamt-Wirkungsgrad als herkömmliche Batteriezellenmodule betreibbar sind.

Vorzugsweise ist vorgesehen, dass die Terminals an jeweils einander gegenüberliegenden Seitenflächen angeordnet sind. Das heißt, dass bei Ausführung des Batteriezellengehäuses in Quaderform ein erstes Terminal an einer ersten Seitenfläche und ein zweites Terminal an einer zweiten Seitenfläche angeordnet ist, wobei die beiden genannten Seitenflächen einander gegenüberliegen. Durch diese Anordnung der Terminals lässt sich in einfacher Weise eine Reihenschaltung mehrerer erfindungsgemäßer Batteriezellen realisieren.

In besonderer Ausgestaltung ist vorgesehen, dass eine Seitenfläche selbst als Terminal ausgebildet ist. Das heißt, das Zellgehäuse übernimmt die Funktion des Terminals. Bevorzugt liegt in dieser Ausgestaltung das positive Potential am Zellgehäuse an. Die erfindungsgemäße Batteriezelle weist wenigstens ein elastisch verformbares Element zur Realisierung einer elastisch verschiebbaren Position einer Kontaktfläche eines Terminals auf. Durch diese Ausgestaltung ist es möglich, bei ausreichend naher Positionierung mehrerer Batteriezellen nebeneinander in einfacher Weise durch ein Terminal einer ersten Batteriezelle eine Anpresskraft auf ein Terminal einer zweiten Batteriezelle, zum Beispiel zur Herstellung einer Reihenschaltung, aufzubringen. Eine die Elastizität bewirkende Federkraft gewährleistet eine sichere Kontaktierung und vermeidet eine mechanische Überbestimmung in der Positionierung der Batteriezelle. Außerdem wird, insbesondere bei Aufbringung von Spannkräften zur Fixierung der Batteriezelle, mittels der durch Federung bewirkten Elastizität eine Überlastung der einander kontaktierenden Terminals vermieden. Außerdem besteht ein positiver Effekt der Elastizität darin, dass durch sie Fertigungs- und/oder Montagetoleranzen ausgeglichen werden können, so dass geringere Anforderungen an die Fertigung und an die Montage zu stellen sind. In einer nicht erfinderischen Ausführungsform kann das elastisch verformbare Element dabei ein Terminal sein. Das heißt, dass das Terminal selbst das elastisch verformbare Element ausbildet. Das Terminal kann dabei als Block ausgeführt sein, wobei die Elastizität alleine durch den Elastizitätsmodul des verwendeten Terminal-Werkstoffes bestimmt wird. In alternativer Ausgestaltung ist das Terminal als ein Federelement ausgebildet, zum Beispiel in Form einer Druck- oder Biegefeder, wobei bei einer Ausgestaltung als Biegefeder diese bevorzugt eine V-Form hat. Ein erster Schenkel der V-Form ist fest und elektrisch leitfähig mit dem jeweiligen Batteriepol verbunden und der andere, zweite Schenkel bildet die Kontaktfläche des Terminals aus.

In der erfindungsgemäßen Ausführungsform ist vorgesehen, dass das elastisch verformbare Element eine Seitenfläche des Batteriezellengehäuses ist, an der ein Terminal fest angeordnet ist, beziehungsweise die das Terminal selbst ausbildet. Durch die elastische Verformung der Seitenfläche ist das an der Seitenfläche fest angeordnete Terminal in seiner Position elastisch verschiebbar, so dass es bei einer Anordnung von Batteriezellen nebeneinander eine elastische Druckkraft auf ein Terminal einer anderen Batteriezelle beziehungsweise auf dessen Kontaktfläche ausüben kann. Dabei können Kräfte, die zur Verhinderung einer betriebsbedingten Aufweitung beziehungsweise eines "Aufblähens" des Zellengehäuses zwecks Verbesserung der Performance und Erhöhung der Lebensdauer der Batteriezelle aufgebracht werden, in dieser Ausgestaltung der Erfindung zur Aufbringung der Kontaktierungskräfte an den Terminals dienen.

Eine weitere Ausgestaltung zur Realisierung des elastisch verformbaren Elementes ist eine Folie, mit der eine Seitenfläche beschichtet ist und an der ein Terminal angeordnet ist, wobei die Folie selbst als Federelement wirkt.

In einer nicht erfindungsgemäßen, alternativen Ausgestaltung sind die elastisch verformbaren Elemente Druckfederelemente, die eine elastische Positionierung wenigstens eines Terminals einer Batteriezelle bewirken.

In einer weiteren bevorzugten Ausgestaltung der Erfindung ist vorgesehen, dass sich ein Terminal der erfindungsgemäßen Batteriezelle seitlich über die Ebene der jeweiligen Seitenflächen hinaus erstreckt. Das heißt, dass das Terminal aus der Seitenfläche herausragt beziehungsweise sich seitlich weiter vom Zentrum der Batteriezelle erstreckt, als es dem Abstand der Seitenfläche vom Zentrum der Batteriezelle entspricht. Es bietet sich in dieser Ausgestaltung an, dass das Terminal das elastisch verformbare Element ausbildet und eine V-Form hat, so dass dessen Kontaktfläche über die Seitenfläche herausragt.

In alternativer Ausgestaltung umfasst das Terminal einen Klotz, wobei der Klotz fest mit dem Batteriezellenpol verbunden sein kann oder auch als ein extra Bauteil vorliegt. In letzterer Ausgestaltung ist dieser Klotz nach Positionierung der einzelnen Batteriezellen nebeneinander zur Realisierung des elektrischen Kontaktes zwischen den Batteriepolen beziehungsweise Terminals der Batteriezellen einzuklemmen, wobei das elastisch verformbare Element die Klemmkraft zur Fixierung des Klotzes aufbringt.

Wie bereits erwähnt, kann dabei die elastische Kraft und somit die Klemmkraft durch eine federnde Seitenfläche und gegebenfalls zusätzlich durch das Terminal selbst aufgebracht werden. Das heisst, dass in der Ausgestaltung mit Klotz eine Seitenfläche, an der das Terminal angeordnet ist, das elastisch verformbare Element ausbildet. Der Klotz kann zusätzlich ein elastisch verformbares Element sein und/oder ein zur Anlage des Klotzes dienender Bereich des übrigen Terminals. Das über die Seitenfläche herausragende Terminal ist bevorzugt am positiven Pol der Batteriezelle angeordnet und aus einer geeigneten Aluminium-Legierung hergestellt. Es sollen dabei jedoch nicht Ausgestaltungen von der Erfindung ausgeschlossen sein, bei denen ein sich seitlich über die Ebene der Seitenfläche hinaus erstreckendes Terminal am negativen Pol der Batteriezelle angeschlossen ist.

Das jeweils andere Terminal der erfindungsgemäßen Batteriezelle ist in der Ausgestaltung, in der ein erstes Terminal über eine Seitenfläche herausragt, bevorzugt lediglich als eine im Wesentlichen glatte Kontaktebene ausgeführt. Diese Kontaktebene kann in besonderer Ausführung in die jeweilige Seitenfläche eingelassen sein und somit einen geringeren Abstand zum Zentrum der Batteriezelle haben als die Seitenfläche, an der dieses Terminal angeordnet ist. Der Vorteil dieser Ausgestaltung liegt darin, dass bei Verwendung eines Klotzes am ersten Terminal selbst bei Nachlassen der elastischen Wirkung des elastisch verformbaren Elementes eine formschlüssige Fixierung dieses Klotzes zumindest in zwei translatorischen Freiheitsgraden gewährleistet ist.

Außerdem wird erfindungsgemäß ein Batteriezellenmodul zur Verfügung gestellt, welches mehrere der erfindungsgemäßen Batteriezellen umfasst, wobei ein Terminal einer ersten Batteriezelle ein Terminal einer zweiten Batteriezelle kontaktiert. Bevorzugt kontaktiert dabei das Terminal der ersten erfindungsgemäßen Batteriezelle das Terminal der zweiten erfindungsgemäßen Batteriezelle unmittelbar. Das heißt, dass in dieser bevorzugten Ausführungsform die Terminals aneinander anliegen. Es wird somit eine elektrische Kontaktierung ohne die Zuhilfenahme eines extra Verbinders erreicht.

Ein weiterer Aspekt der vorliegenden Erfindung ist ein Verfahren zur Herstellung eines erfindungsgemäßen Batteriezellenmoduls, bei dem wenigstens eine erste und eine zweite erfindungsgemäße Batteriezelle bereitgestellt werden, nebeneinander positioniert werden und wenigstens ein Terminal der ersten Batteriezelle mit einem Terminal der zweiten Batteriezelle elektrisch leitfähig verbunden wird. Bevorzugt erfolgt dabei die Kontaktierung der Terminals durch Andrücken der Kontaktflächen der Terminals aneinander, wobei dieses Andrücken durch eine entsprechende Positionierung der Batteriezelle, unter Aufbringung einer elastisch wirkenden Spannkraft wenigstens einer Seitenfläche, an der ein Terminal angeordnet ist, und gegebenenfalls zusätzlich durch ein Federungsverhalten wenigstens eines Terminals, realisiert wird.

Zur Gewährleistung einer dauerhaften elektrischen Kontaktierung der Terminals kann weiterhin vorgesehen sein, dass eine stoffschlüssige Verbindung zwischen den Terminals erzeugt wird. Diese stoffschlüssige Verbindung wird bevorzugt mittels einer Schweißung hergestellt, insbesondere einer Laserschweißung. Die Laserschweißung ist derart durchzuführen, dass die Terminals nicht nur an ihren Oberflächen an einer Kante, sondern auch mittels einer Tiefenschweißung miteinander verbunden werden.

Die vorliegende Erfindung betrifft außerdem ein Kraftfahrzeug, insbesondere ein elektromotorisch antreibbares Kraftfahrzeug, welches wenigstens ein erfindungsgemäßes Batteriezellenmodul umfasst, wobei das Batteriezellenmodul mit einem Antriebssystem des Kraftfahrzeuges verbunden ist.

### Zeichnungen

Ausführungsbeispiele der Erfindung werden anhand der Zeichnungen und der nachfolgenden Beschreibung näher erläutert. Es zeigen:
Figur 1 eine erfindungsgemäße Batteriezelle in Ansicht von der Seite,
Figur 2 ein erfindungsgemäßes Batteriezellenmodul mit zwei erfindungsgemäßen Batteriezellen in Ansicht von oben, und
Figur 3 ein als elastisch verformbares Element ausgeführtes erstes Terminal 20 in Ansicht von der Seite.

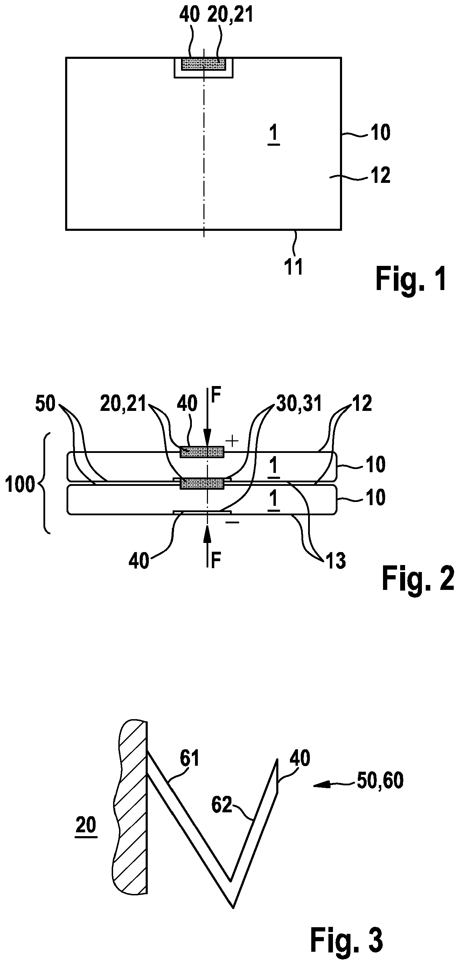

In Figur 1 ist eine Batteriezelle 1 dargestellt, die ein im Wesentlichen quaderförmiges Zellengehäuse 10 aufweist. Dieses Zellengehäuse 10 umfasst eine an der Unterseite angeordnete Grundfläche 11, von der sich im Wesentlichen senkrecht die erste Seitenfläche 12 sowie die zweite Seitenfläche 13 erstrecken, die zueinander parallel angeordnet sind, wie insbesondere aus Figur 2 ersichtlich ist.

In Figur 1 ist die erste Seitenfläche 12 erkennbar, so dass die in Figur 1 dargestellte Ansicht einer Ansicht des in Figur 2 dargestellten Batteriezellenmoduls 100 in Richtung der von oben nach unten eingezeichneten und auf den Pluspol wirkenden Andruckkraft F entspricht.

An der in Figur 1 dargestellten ersten Seitenfläche 12 ist ein erstes Terminal 20 angeordnet. Dieses erste Terminal 20 weist eine Kontaktfläche 40 auf. In der in Figur 1 dargestellten Ausführungsform umfasst das erste Terminal 20 einen Klotz 21.

Das heißt, dass im Unterschied zu herkömmlichen Batteriezellen an der erfindungsgemäßen Batteriezelle 1 die Terminals 20, 30 nicht an einer oberen Begrenzungsfläche des Batteriezellengehäuses und aus dieser herausragend angeordnet sind, sondern seitlich am Zellengehäuse 10 angeordnet sind.

Durch diese Ausgestaltung ergibt sich die Möglichkeit der einfachen Reihenschaltung mehrerer Batteriezellen 1 zur Herstellung eines Batteriezellenmoduls 100, wie zum Beispiel in Figur 2 dargestellt ist. Jede der in Figur 2 dargestellten Batteriezellen 1 umfasst ein erstes Terminal 20 sowie ein zweites Terminal 30. Das erste Terminal 20 ist vorzugsweise am Pluspol der Batteriezelle 1 angeordnet und das zweite Terminal 30 ist am Minuspol der Batteriezelle 1 angeordnet. Es ist ersichtlich, dass das jeweils erste Terminal 20 einen Klotz 21 umfasst, der über die jeweilige erste Seitenfläche 12 herausragt. Das zweite Terminal 30 dagegen ist durch eine in die zweite Seitenfläche 13 eingelassene Kontaktebene 31 ausgebildet. Bei der in Figur 2 dargestellten Anordnung der Batteriezellen 1 nebeneinander und parallel zueinander drückt das jeweils erste Terminal 20 auf das jeweils zweite Terminal 30 der benachbarten Batteriezelle 1. Es ist ersichtlich, dass somit bereits bei Positionierung und Fixierung der Batteriezellen 1 nebeneinander die elektrische Kontaktierung der Batteriezellen 1 herstellbar ist. Es lassen sich somit in einfacher Weise und unter Einsparung mehrerer Montageschritte sowie mehrerer Fertigungseinrichtungen Batteriezellenmodule oder auch gesamte, mehrere Batteriezellen umfassende Batterien, sowie so genannte Battery Packs erzeugen.

Die Erfindung ist dabei nicht auf die in Figur 2 dargestellte Ausführungsform eingeschränkt, bei der ein Abstand zwischen den Batteriezellen 1 eingehalten wird, sondern die Erfindung kann auch derart ausgestaltet sein, dass die Seitenflächen 13 und 12 direkt aneinander anliegen.

Zur Vermeidung einer mechanischen Überbestimmung in der Positionierung der Batteriezellen 1 sowie zur Verhinderung einer mechanischen Überbelastung der Terminals kann dabei eine der ersten Seitenflächen 12 oder zweiten Seitenflächen 13 als elastisch verformbares Element ausgestaltet sein, zusätzlich kann insbesondere das erste Terminal 20 als erstes elastisch verformbares Element ausgebildet sein so dass bei Aufbringung der Andruckkräfte F die Gefahr der Beschädigung der Zellengehäuse 10 und/oder der Terminals 20, 30 verhindert beziehungsweise verringert wird. Hinzukommend zur Ausgestaltung der Terminals 20, 30 und/oder der Seitenflächen 12, 13 als elastisch verformbare Elemente können zwischen den Batteriezellen 1 auch elastisch verformbare Folien oder Federelemente angeordnet sein. In besonderer Ausgestaltung können zwischen den Batteriezellen Kühlelemente, wie zum Beispiel Kühlplatten angeordnet sein, die gleichzeitig das gewünschte elastische Verhalten aufweisen.

Die Erfindung ist außerdem nicht auf die in Figur 2 dargestellte Aufbringung der Andruckkräfte F eingeschränkt, sondern sie kann auch derart ausgestaltet sein, dass die Batteriezellen wie dargestellt positioniert und fixiert werden, wobei die auf die Terminals wirkenden Kontaktierungskräfte alleine nur durch elastisch verformbare Elemente der Batteriezellen. Das heißt, dass in dieser Ausgestaltung keine Verspannungskräfte zur Realisierung der elektrischen Kontaktierung genutzt werden.

In einer nicht erfinderischen Ausgestaltung ist es auch möglich, dass die Batteriezellen 1 ohne elastisch verformbare Elemente ausgestaltet sind, wobei die Batteriezellen 1 in Figur 2 positioniert werden und mittels der Andruckkräfte derart aufeinander gedrückt werden, dass die Terminals 20, 30 einander kontaktieren.

Eine weitere, nicht erfinderische Ausführungsform der Batteriezellen umfasst jedoch ein erstes Terminal 20, welches ein elastisch verformbares Element 50 aufweist, wie es schematisch in Figur 3 gezeigt ist.

Dieses elastisch verformbare Element 50 umfasst ein Federelement 60, welches einen ersten Schenkel 61, der mit dem jeweiligen Batteriepol fest verbunden ist, sowie einen zweiten Schenkel 62 ausbildet, der eine Kontaktfläche 40 aufweist. Der erste Schenkel 61 bildet zusammen mit dem zweiten Schenkel 62 im Wesentlichen eine V-Form aus. Das dargestellte elastisch verformbare Element 50 ermöglicht in einfacher Weise eine elastische Verformung, zum Beispiel durch Biegung im Bereich der Schenkel 61, 62, so dass durch dieses elastisch verformbare Element 50 in einfacher Weise eine Kontaktierungskraft zwischen dessen Kontaktfläche 40 und einem zweiten Terminal 30, wie zum Beispiel in Figur 2 dargestellt ist, realisierbar ist. Das heißt, dass bei einer Anordnung des elastisch verformbaren Elementes 50 anstelle des Klotzes 21 in Figur 2 in einfacher Weise die benötigte Kontaktierungskraft zwischen den Terminals 20, 30 durch das zweite Terminal 20 beziehungsweise durch dessen Elastizität zur Verfügung gestellt wird. In einer derartigen Ausgestaltung müssen nicht unbedingt die in Figur 2 dargestellten Andruckkräfte F vorhanden sein, sondern es lassen sich die Batteriezellen 1, wie dargestellt, in einem bestimmten Abstand zueinander positionieren und fixieren, wobei die Kontaktierungskraft zwischen den Terminals 20, 30 durch das elastisch verformbare Element 50 aufgebracht wird.

## Patentansprüche

1. Batteriezelle, insbesondere Lithium-Ionen-Batteriezelle, umfassend ein Zellengehäuse (10) mit einer zur Aufstellung der Batteriezelle dienenden Grundfläche (11) und wenigstens einer Seitenfläche und zwei Terminals, wobei ein erstes Terminal (20) mit der Katode der Batteriezelle (1) und ein zweites Terminal (30) mit der Anode der Batteriezelle (1) elektrisch leitfähig verbunden ist, wobei die Terminals (20, 30) an wenigstens einer Seitenfläche des Zellengehäuses (10) angeordnet sind, wobei die Batteriezelle wenigstens ein elastisch verformbares Element (50) zur Realisierung einer elastisch verschiebbaren Position einer Kontaktfläche (40) eines Terminals (20, 30) aufweist,
**dadurch gekennzeichnet,**
**dass** das elastisch verformbare Element (50) eine Seitenfläche (12, 13) ist, an der ein Terminal (20, 30) fest angeordnet ist beziehungsweise die das Terminal selbst ausbildet.

2. Batteriezelle nach Anspruch 1, bei der die Terminals (20, 30) an jeweils einander gegenüberliegenden Seitenflächen (12, 13) angeordnet sind.

3. Batteriezellenmodul, welches mehrere der Batteriezellen (1) gemäß wenigstens einem der Ansprüche 1 und 2 umfasst, wobei ein Terminal (20) einer ersten Batteriezelle ein Terminal (30) einer zweiten Batteriezelle kontaktiert.

4. Verfahren zur Herstellung eines Batteriezellenmoduls gemäß Anspruch 3, bei dem mindestens eine erste und eine zweite Batteriezelle gemäß wenigstens einem der Ansprüche 1 und 2 bereitgestellt werden, nebeneinander positioniert werden und wenigstens ein Terminal (20) der ersten Batteriezelle mit einem Terminal (30) der zweiten Batteriezelle elektrisch leitfähig verbunden wird.

5. Verfahren zur Herstellung eines Batteriezellenmoduls nach Anspruch 4, bei dem eine stoffschlüssige Verbindung zwischen den Terminals (20, 30) erzeugt wird.

6. Kraftfahrzeug, insbesondere elektromotorisch antreibbares Kraftfahrzeug, welches mindestens ein Batteriezellenmodul (100) gemäß Anspruch 3 umfasst, wobei das Batteriezellenmodul (100) mit einem Antriebssystem des Kraftfahrzeuges verbunden ist.

## Claims

1. Battery cell, in particular lithium-ion battery cell, comprising a cell housing (10) having a base area (11) on which the battery cell is placed and at least one side face and two terminals, wherein a first terminal (20) is electrically conductively connected to the cathode of the battery cell (1) and a second terminal (30) is electrically conductively connected to the anode of the battery cell (1), wherein the terminals (20, 30) are arranged on at least one side face of the cell housing (10), wherein the battery cell has at least one elastically deformable element (50) for realizing an elastically displaceable position of a contact area (40) of a terminal (20, 30),
**characterized**
**in that** the elastically deformable element (50) is a side face (12, 13) on which a terminal (20, 30) is fixedly arranged or which itself forms the terminal.

2. Battery cell according to Claim 1, in which the terminals (20, 30) are arranged on side faces (12, 13) which are situated opposite one another.

3. Battery cell module which comprises a plurality of the battery cells (1) according to at least one of Claims 1 and 2, wherein a terminal (20) of a first battery cell makes contact with a terminal (30) of a second battery cell.

4. Method for producing a battery cell module according to Claim 3, in which method at least a first and a second battery cell according to at least one of Claims 1 and 2 are provided, are positioned next to one another and at least one terminal (20) of the first battery cell is electrically conductively connected to a terminal (30) of the second battery cell.

5. Method for producing a battery cell module according to Claim 4, in which method a cohesive connection is generated between the terminals (20, 30).

6. Motor vehicle, in particular motor vehicle which can be driven by an electric motor, which comprises at least one battery cell module (100) according to Claim 3, wherein the battery cell module (100) is connected to a drive system of the motor vehicle.

## Revendications

1. Élément d'accumulateur, en particulier un élément d'accumulateur au lithium-ion, comprenant un boîtier d'élément (10) possédant une surface de base (11), destinée à la mise en place de l'élément d'accumulateur, et au moins une surface latérale et deux bornes, dans lequel une première borne (20) est reliée électriquement à la cathode de l'élément d'accumulateur (1), et une deuxième borne (30), à l'anode de l'élément d'accumulateur (1), dans lequel les bornes (20, 30) sont disposées sur au moins une surface latérale du boîtier d'élément (10), dans lequel l'élément d'accumulateur comporte au moins un élément déformable élastiquement (50) pour mettre en oeuvre une position déplaçable élastiquement d'une surface de contact (40) d'une borne (20, 30),
**caractérisé en ce que** l'élément déformable élastiquement (50) est une surface latérale (12, 13) sur laquelle est disposée de manière fixe une borne (20, 30) ou qui forme la borne elle-même.

2. Élément d'accumulateur selon la revendication 1, dans lequel les bornes (20, 30) sont disposées sur des surfaces latérales opposées (12, 13).

3. Module d'éléments d'accumulateur comprenant une pluralité des éléments d'accumulateur (1) selon au moins l'une des revendications 1 et 2, dans lequel une borne (20) d'un premier élément d'accumulateur vient au contact d'une borne (30) d'un second élément d'accumulateur.

4. Procédé de fabrication d'un module d'éléments d'accumulateur selon la revendication 3, dans lequel il est prévu au moins un premier et un second élément d'accumulateur selon au moins l'une des revendications 1 et 2 qui sont positionnés côte à côte et au moins une borne (20) du premier élément d'accumulateur est reliée électriquement à une borne (30) du second élément d'accumulateur.

5. Procédé de fabrication d'un module d'éléments d'accumulateur selon la revendication 3, dans lequel une liaison par complémentarité de matériau est établie entre les bornes (20, 30).

6. Véhicule à moteur, en particulier véhicule à moteur électrique, qui comprend au moins un module d'éléments d'accumulateur (100) selon la revendication 3, dans lequel le module d'éléments d'accumulateur (100) est relié à un système d'entraînement du véhicule à moteur.
